# EUROPÄISCHE PATENTSCHRIFT

(11) **EP 0 741 289 B1**
(45) Veröffentlichungstag und Bekanntmachung des Hinweises auf die Patenterteilung: **31.10.2001**
(21) Anmeldenummer: 96102003.9
(22) Anmeldetag: 12.02.1996
(51) Int. Cl.: G01M 17/06, G01P 3/56

(54) **Prüfstand für Kettenfahrzeuge**
Test bench for tracked vehicles
Banc d'essai de véhicules à chenilles

(30) Priorität: 15.04.1995 DE 19514173
(43) Veröffentlichungstag der Anmeldung: 06.11.1996
(73) Patentinhaber: Rheinmetall Landsysteme GmbH, 24159 Kiel (DE)
(72) Erfinder: Schmitt, Josef, Dipl.-Ing., D-24229 Dänischenhagen (DE); Bruhn, Peter, D-24536 Neumünster (DE)
(74) Vertreter: Hansmann, Dierk, Dipl.-Ing.

(56) Entgegenhaltungen:
- WO-A-87/05574
- DE-A- 2 601 113
- DE-A- 3 932 647
- DE-A- 4 216 843
- DE-C- 3 636 153
- DE-C- 3 636 267
- US-A- 4 699 021
- US-A- 4 895 052

## Beschreibung

Die Erfindung bezieht sich auf einen Prüfstand für Kettenfahrzeuge zur Durchführung von Lenkvorgängen.

Derartige Prüfstände sind bekannt, um Fahrzustände bei einem stationär angeordneten Kettenfahrzeug zu simulieren. Es werden die Fahrbetriebs zustände, wie Beschleunigen, Abbremsen, Kurvenfahrt sowie Dauerbetrieb bei Steigungen und Gefälle realitätsnah geprüft.

Eine Ausbildung eines Prüfstandes für Kettenfahrzeuge ist nach der DE-A-39 13 070 bekannt geworden. Mit einem derartigen Prüfstand sollen im wesentliichen Schwingungen der Ketten, die vom Fahrzeuguntergrund herühren erfaßt werden. Hierbeik werden die Ketten durch Laufbänder aufgenommen, die gegebenenfalls mit elektrischen Maschinen angetrieben werden.

Weiterhin sind Prüfstände für Kraftfahrzeuge, wie nach der DE-A-42 16 843, in unterschiedlichen Ausführungen bekannt. Hierbei wird die Vorder- oder Hinterachse durch im Abstand angeordnete Laufrollen aufgenommen und es sind Maschinen zum Antrieb bzw. Abbremsen der aufgenommenen Räder angeordnet. Beide Seiten sind dabei über Verteilergetriebe verbunden, wobei ein Überlagerungsantrieb als Motor zugeordnet ist.

Hierdurch sollen genau definierte Drehzahldifferenzen sowohl zwischen Vorderachse und Hinterachse als auch zwischen linker Antriebsseite und rechter Antriebsseite in das zu testende Kraftfahrzeug eingeleitet werden. Es soll auch die Möglichkeit geschaffen werden, Kurvenfahrten zu simulieren oder das Verhalten bei verschiedenen Antischlupfsituationen überprüft werden. Eine Übertragung auf Kettenfahrzeuge mit abbremsbaren Ketten zur Kurvenfahrt ist nicht möglich.

Nach der DE-C-36 36 267 ist ein Gangwechsel- und Lenkgetriebe für ein Vollkettenfahrzeug vorgeschlagen worden, um bei einer relativ hohen Geschwindigkeit gute Lenkeigenschaften für die Marschfahrt und eine relativ geringe stufenlos regelbare Fahrgeschwindigkeit bei Arbeitsfahrt zu ermöglichen. Hierbei soll das Lenken bei Marsch- und Arbeitsfahrt mit dem gleichen Lenkvorgang über einen mechanischen Betätigungsstrang rein mechanisch durchgeführt werden. Ferner wird die Fahrgeschwindigkeit bei Arbeitsfahrt über elektrische Signale stufenlos geregelt.

Bei einem Kettenfahrzeug, das über Abbremsen oder Beschleunigen der einen Kettenseite bzw. der anderen Kettenseite gelenkt wird und dadurch in den Zustand einer Kurvenfahrt gebracht wird, besteht das Problem, eine Simulation durchzuführen, da für eine Kurvenfahrt eine erhebliche Leistung auf der einen Kettenseite aufgebracht werden, während die andere Kettenseite Leistung abgeben muß.

Beim Fahrbetrieb eines Kettenfahrzeuges, das mit eigenem Antrieb fährt, wird das Problem mit einem mechanisch/hydraulischen Antriebsstrang vom Antriebsmotor bis zu den die Ketten antreibenden Kettenantriebsrädern so gelöst, daß das Getriebe eine spezielle Überbrückung zwischen den Seiten mit einer sogenannten Nullwelle herstellt. Bei Kurvenfahrt wird die auf der einen Seite zusätzlich benötigte Leistung mittels der Nullwelle von der einen Seite, wo sie bei Kurvenfahrt nicht benötigt wird, auf die andere Seite übertragen.

Bei einem Prüfstand für Kettenfahrzeuge muß aber jede Leistung, die das Fahrzeug in den verschiedenen Fahrbetriebszuständen an die Ketten abgibt, auch von außen auf die Antriebsräder des Fahrzeuges oder den Antriebsstrang zur simulierten Fortbewegung aufgebracht werden, damit eine vollständige Vermessung überhaupt möglich ist.

Es ist bei Prüfständen für Kettenfahrzeuge für den Fahrzustand Kurvenfahrt bekannt, über zugeordnete Elektromotoren und Leistungsbremsen, die an den Kettenantriebsrädern angeordnet sind, mit einer erheblich höheren Leistung als für eine Geradeausfahrt bei simulierter Gefällefahrt oder Steigungsfahrt auszustatten. Hierbei ist eine Leistung mit einem Faktor 2 und mehr erforderlich. Durch diese besonderen Anforderungen für das simulierte Lenken muß damit mindestens die doppelte elektrische Leistung als in einem üblichen Fahrzeugprüfstand installiert werden.

Die Aufgabe der Erfindung ist es, einen gattungsgemäßen Prüfstand zu verbessern und eine realitätsnahe Simulation von Lenkvorgängen mit geringen Energieleistungen zu ermöglichen.

Die Lösung dieser Aufgabe erfolgt erfindungsgemäß durch die Merkmalskombination des Anspruches 1.

Hierdurch wird auch auf dem Prüfstand ein leistungsausgleichendes Getriebe außerhalb des Kettenfahrzeuges eingesetzt und realitätsgetreu Leistung von der einen Seite auf die andere Seite des Antriebs übertragen.

Eine einfache Ausgestaltung besteht darin, daß das Getriebe als Planetengetriebe ausgebildet ist und die Getriebeeingänge jeweils über Planetenradsätze verbunden und miteinander über eine Welle gekoppelt sind, wobei zusätzlich beide Seiten des Getriebes die Nullwelle antreiben und an einer Seite ein Getriebe zur Drehrichtungsumkehr eingeschaltet ist.

In Ausgestaltung dieser Ausbildung wird vorgeschlagen, daß die Welle des Planetengetriebes eine Bremse und/oder eine weitere Bremse für hohe Momente bei kleineren Drehzahlen aufweist.

Alternativ ist vorgesehen, daß das Getriebe als Kegelradausgleichsgetriebe ausgebildet ist und die Getriebeeingänge mit Tellerräder verbunden sind, wobei ein Getriebeeingang ein Getriebe zur Drehrichtungsumkehr aufweist und daß die Tellerrädern über Kegelzahnräder verbunden sind, die eine Nullwelle bei Drehzahldifferenzen antreiben.

In der Zeichnung sind Ausführungsbeispiele der Erfindung schematisch dargestellt. Es zeigen:
- Fig. 1: eine Grundversion mit einem Planetengetriebe,
- Fig. 2: eine Darstellung gemäß Fig. 1 mit einer zentralen Getriebebremse,
- Fig. 3: eine weitere Ausführungsform mit einer speziellen Getriebebremsanordnung und
- Fig. 4: eine alternative Ausführung mit einem Kegelradausgleichsgetriebe.

Bei der dargestellten Anordnung ist ein Kettenfahrzeug 1 als Prüfling stationär in einer definierten Position in einem Prüfstand angeordnet und eine linke und rechte Abtriebsseite des Fahrzeugantriebes über Drehwellen 2,3 mit dem Prüfstand verbunden. Mit den Drehwellen 2,3 ist jeweils eine mechanische Leistungsbremse 4,5 für eine Aufbringung eines hohen Momentes bei kleinen Drehzahlen gekoppelt. In Reihenschaltung mit den Leistungsbremsen 4,5 sind in diesem Fall jeweils mechanische Getriebe 6,7 geschaltet, die die Drehbewegungen und Leistungen vom Hauptstrang auskoppeln und die Drehzahlen heraufsowie die Drehmomente herabsetzen. Weiterhin ist jeweils eine Überlastkupplung 8,9 und ein Schwungrad 10,11 im Hauptgang angeordnet, um dynamische Belastungen des fahrenden Fahrzeuges auf seinen Antrieb simulieren zu können.

Der Ausgang der Getriebe 6,7 ist jeweils mit einer hydraulischen Leistungsbremse 12,13 verbunden und gegebenenfalls mit einer elektrischen Antriebsmaschine 14,15, wie eine Asynchron-Pendelmaschine, gekoppelt.

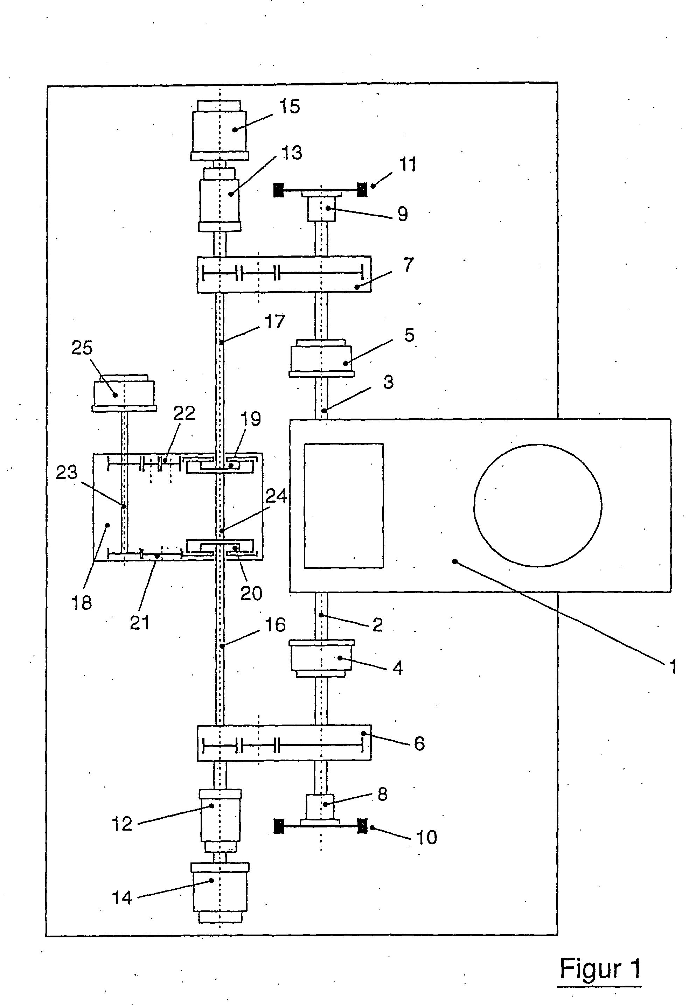

Die Ausgangsseiten der Getriebe 6,7 sind über eine Welle 16,17 im Falle der Fig. 1 bis 3 mit einem Getriebe 18 als Planetengetriebe verbunden, wobei Planetenträger der Planetensätze 19,20 gekoppelt sind, deren äußeren Teile mittels einer Welle 24 miteinander verbunden sind. Beiderseits sind Getriebe 21,22 zugeordnet, die einerseits mit Sonnenrändern der Planetensätze 19,20 und andererseits mit einer Nullwelle 23 gekoppelt sind. Hierbei sind die Getriebe 21,22 derart ausgebildet, daß ein Getriebe 21,22 eine Drehrichtungsumkehr ermöglicht und somit die Nullwelle 23 nur bei Drehzahldifferenzen der Wellen 16,17 angetrieben wird. Der Nullwelle 23 ist zusätzlich eine Leistungsbremse 25 zugeordnet. Hierdurch ist eine Auskopplung der Drehzahldifferenzen mittels der Wellen 16,17 und die Übertragung aus dem angeschlossenen Planetengetriebe 18 möglich. Bei einem Lenkvorgang wird dadurch die auf der einen Fahrzeug- und Antriebsseite zu vermindernde Antriebsleistung abgenommen und auf der anderen Fahrzeug- und Antriebsseite, an der die Antriebsleistung erhöht werden muß, zugeführt.

Bei einem Prüfstandslauf zur Lenkung steht das Kettenfahrzeug 1 gefesselt in der definierten Position mit laufendem Triebwerk und eingeschaltetem Fahrzeuggetriebe. Hierbei wird es mit einer Geschwindigkeitsbelastung bei Geradeausfahrt in der Ebene über die Leistungsbremsen 12,13 gering belastet oder über die Leistungsbremsen 4,5 bei kleiner Geschwindigkeit und Drehzahl belastet, um den Fahrzeugvortriebswiderstand zu simulieren. Die Wellen 2,3 und die Wellen 16,17 laufen in der gleichen Drehrichtung, da sie mit gleichartigen Untersetzungsgetrieben 6,7, bestehend aus jeweils drei Zahnrädern, verbunden sind. Die Wellen 16,17 sind im Getriebe 18 mit den Planetenrädern der Planetengetriebe 19,20 fest verbunden. Die Planeteninnenräder des einen Planetengetriebes 19 sind mittels des Getriebes 22 bestehend aus drei Zahnrädern und die Planetenräder des anderen Planetengetriebes 20 mittels des Getriebes 21, bestehend aus zwei Zahnrädern, über die Nullwelle 23 an den Getriebeausgängen fest verbunden. Da im Getriebe 22 eine Drehsinnumkehr gegenüber dem Getriebe 21 stattfindet, wird die Welle 23 gegenläufig mit einem Drehmoment beaufschlagt und steht still, wenn die Wellen 16,17 gleiche Drehzahl aufweisen. Die Welle 24, die die jeweiligen Planetenaußenräder der Planetensätze 19,20 verbindet, rotiert ebenfalls mit der gleichen Drehzahl nach dem bekannten Prinzip des Planetengetriebes. Dies ist der Zustand der Geradeausfahrt mit gleicher Belastung beider Antriebsseiten.

Mit Einleitung eines Lenkvorganges und damit Auslenken des Lenkrades werden die Antriebsseiten mit unterschiedlichen Drehzahlen durch den Fahrzeugantrieb beaufschlagt, die Innenseite, nach der eine Drehung erfolgen würde, mit einer geringeren Drehzahl und die Außenseite mit einer höheren Drehzahl. Diese erhebliche Belastung des Fahrzeugantriebes soll durch den Prüfständ simuliert werden, da sonst an dieser Stelle nur ein "leistungsloses" Lenken simulierbar ist. Abweichend von der beschriebenen Geradeausfahrt werden die Wellen 16,17 jetzt mit unterschiedlicher Drehzahl beaufschlagt, da auch die Fahrzeugantriebsseiten und somit die Drehwellen 2,3 mit unterschiedlicher Drehzahl laufen. Die Einstellung der Leistungsbremsen 12,13 oder 4,5 mit geringer Belastung wird gegenüber der Gerade-ausfahrt nicht verändert. Mit den Wellen 16,17 laufen somit auch die Planetenräder 19,20 im Getriebe 18 mit unterschiedlicher Drehzahl, und es tritt eine Drehzahldifferenz auf. Da die Welle 24, die die Planetenaußenräder verbindet, die Drehzahldifferenz nicht ausgleicht, erfolgt ein Ausgleich über die Planeteninnenräder und damit über die Getriebe 21,22 und die Nullwelle 23 rotiert mit einer Drehzahldifferenz, die zwischen den Wellen 16,17 besteht bzw. mit einer höheren Drehzahldifferenz entsprechend einem gewählten gleichartigen Übersetzungsverhältnis der Getriebe 21,22.

Die Lenkbelastung wird nun derart simuliert, daß die Nullwelle 23 mit der Leistungsbremse 25 abgebremst wird. Eine übliche Regelungsanordnung wird diese Abbremsung entsprechend dem gewünschten Lenkvorgang/Lenkausschlag und in Abhängigkeit von der simulierten Fahrgeschwindigkeit und in der maximal zulässigen Belastung einstellen. Dadurch wird mit der Abbremsung, die beliebig feinfühlig einstellbar ist und als Dauerbelastung vorgenommen werden kann, der Lenkvorgang vollständig und realitätsbezogen simuliert. Es wird durch den eingeleiteten Lenkvorgang mit der auftretenden Drehzahldifferenz an den Antriebsseiten prüfstandsseitig ein Widerstand entgegengesetzt, der dem Lenkvorgang des Kettenfahrzeuges 1 auf einer Fahrbahn entspricht. Die Lenkung wird quasi verspannt.

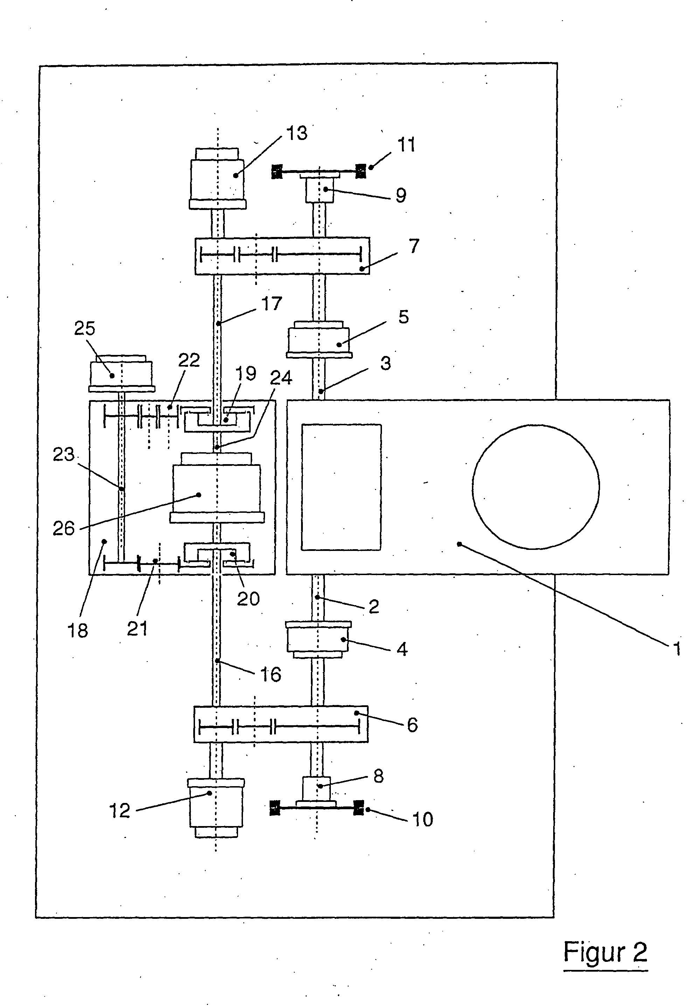

Gemäß Fig. 2 wird eine weitere Ausführungsform dargestellt. Hierbei sind die Leistungsbremsen 12,13 durch eine Leistungsbremse 26 in das Getriebe 18 derart integriert, daß die Leistungsbremse 26 mit der Welle 24, die die Planetenaußenräder 19,20 verbindet, gekoppelt ist. Durch diese eine Leistungsbremse wird die Funktion, wie in der Ausführung nach Fig. 1 dargestellt, in gleicher Weise erfüllt.

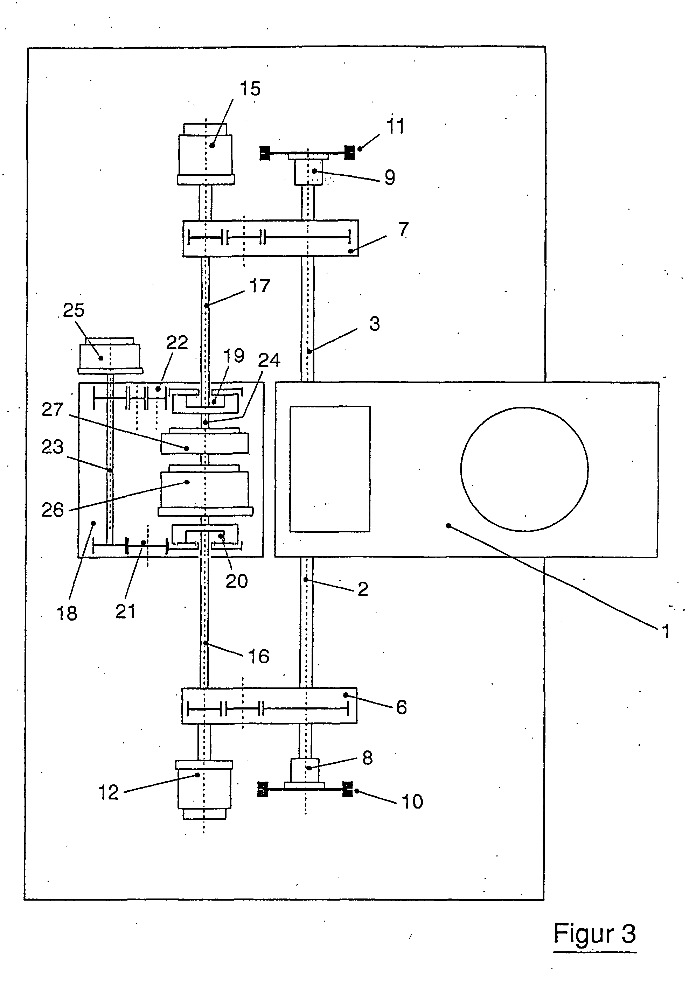

In einer weiteren Ausführungsform nach Fig. 3 ist auch eine Leistungsbremse 26 fest mit der Welle 24 des Getriebes verbunden und zusätzlich anstelle der Leistungsbremsen 4,5 für kleine Drehzahlen eine einzige Leistungsbremse 27 für kleine Drehzahlen ebenfalls fest mit der Welle 24 verbunden. Damit wird eine Leistungsbremse für kleine Drehzahlen eingespart.

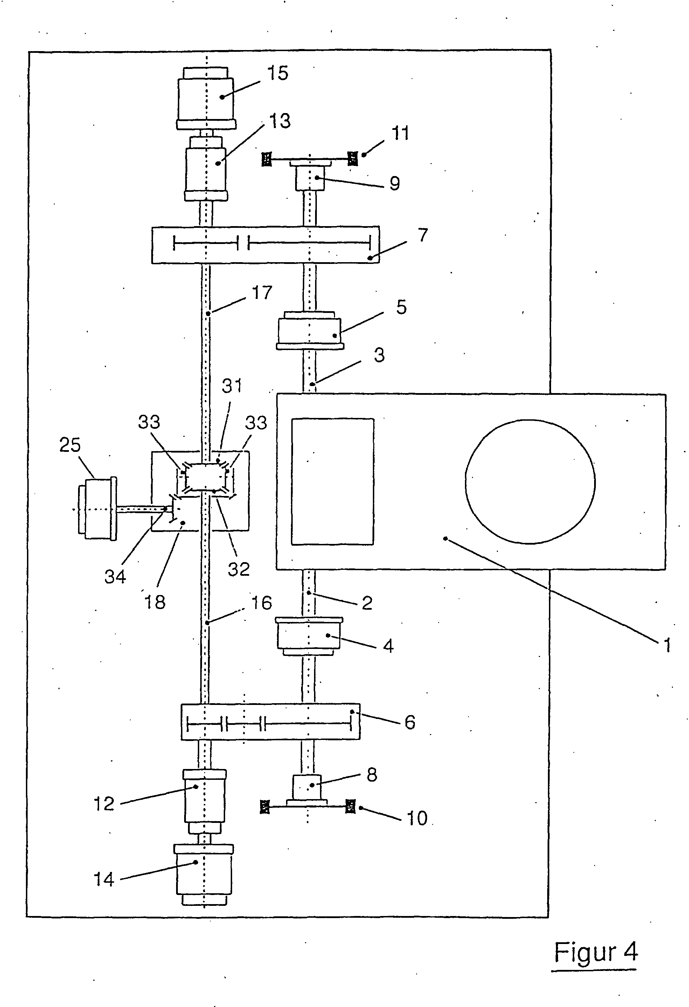

Eine alternative Ausbildung mit einem Kegelradausgleichsgetriebe 18 ist gemäß Fig. 4 dargestellt. Hierbei werden gegenläufig drehende Wellen 16,17 durch Drehrichtungsumkehr im Getriebe 6,7 mit dem Getriebe 18 über zwei Tellerräder 31,32 verbunden. Mit zwei Kegelzahnräder 33 sind die Tellerräder 31,32 wiederum verbunden. Ferner wird über die Kegelzahnräder 33 eine Nullwelle 34 angetrieben, die somit nur bei Drehzahldifferenzen der Tellerräder 31,32 angetrieben wird und eine zugeordnete Leistungsbremse 25 aufweist.

Wie in vorhergehenden Ausführungen werden bei simulierter Kurvenfahrt des Kettenfahrzeuges die Wellen 16,17 mit unterschiedlichen Drehzahlen und in diesem Fall mit entgegengesetzter Drehrichtung angetrieben. Hierbei dreht die Nullwelle 34 entsprechend der Drehzahldifferenz, und über die Leistungsbremse 25 wird die Drehzahldifferenz entsprechend den vorgegebenen Anforderungen abgebremst und die gewünschte Belastung zwischen den Abtriebsseiten über die Wellen 16,17 hergestellt.

## Patentansprüche

1. Prüfstand für Kettenfahrzeuge zur Durchführung von Lenkvorgängen durch Abbremsen oder Beschleunigen der einen bzw. der anderen Kettenseite über ein Lenkgetriebe, indem ein Kettenfahrzeug (1) stationär anordbar ist und antreibbare Fahrzeugachsen über Drehwellen (2,3) jeder Seite über Bremsen (4,5 bzw. 12,13) zur Momentensteuerung beaufschlagbar und über ein Getriebe (18) in der Wirkungsweise eines Differentialgetriebes mit einem Sperrwerk verbunden sind und eine Nullwelle (23), der eine steuerbare Bremse (25) zugeordnet ist, entsprechand einer Drehzohldifferenz zwischen den Seiten, von dem Getriebe (18) antreibbar ist.

2. Vorrichtung nach Anspruch 1, **dadurch gekennzeichnet, daß** das Getriebe (18) als Planetengetriebe ausgebildet ist und die Getriebeeingänge (16,17) jeweils über Planetenradsätze (19,20) verbunden und miteinander über eine Welle (24) gekoppelt sind, wobei zusätzlich beide Seiten des Getriebes (18) die Nullwelle (23) antreiben und an einer Seite ein Getriebe (21,22) zur Drehrichtungsumkehr eingeschaltet ist.

3. Vorrichtung nach Anspruch 2, **dadurch gekennzeichnet, daß** die Welle (24) des Planetengetriebes (18) eine Bremse (26) und/oder eine weitere Bremse (27) für hohe Momente bei kleineren Drehzahlen aufweist.

4. Vorrichtung nach Anspruch 1, **dadurch gekennzeichnet, daß** das Getriebe (18) als Kegelradausgleichsgetriebe ausgebildet ist und die Getriebeeingänge (16,17) mit Tellerräder (31,32) verbunden sind, wobei ein Getriebeeingang (16,17) ein Getriebe (6,7) zur Drehrichtungsumkehr aufweist und daß die Tellerrädern (31,32) über Kegelzahnräder (33) verbunden sind, die eine Nullwelle (34) bei Drehzahldifferenzen antreiben.

## Claims

1. Test bench for tracked vehicles for effecting steering operations by braking or accelerating the one or the other track side via a steering gear in that a tracked vehicle (1) is disposable in a stationary manner and drivable vehicle axles may for the purpose of torque control be acted upon via torque shafts (2, 3) of each side by brakes (4, 5) and are connected by a gear (18) operating in the manner of a differential gear to a blocking mechanism, and a zero shaft (23), with which a controllable brake (25) is associated, is drivable by the gear (18) in accordance with a rotational speed difference between the sides.

2. Apparatus according to claim 1, **characterized in that** the gear (18) takes the form of a planetary gear and the gear inputs (16, 17) are connected in each case by planet wheel sets (19, 20) and coupled to one another by a shaft (24), wherein in addition both sides of the gear (18) drive the zero shaft (23) and at one side a gear (21, 22) for reversal of the direction of rotation is installed.

3. Apparatus according to claim 2, **characterized in that** the shaft (24) of the planetary gear (18) comprises a brake (26) and/or a further brake (27) for high torques at lower rotational speeds.

4. Apparatus according to claim 1, **characterized in that** the gear (18) takes the form of a bevel differential gear and the gear inputs (16, 17) are connected to crown wheels (31, 32), wherein one gear input (16, 17) comprises a gear for reversal of the direction of rotation, and that.the crown wheels (31, 32) are connected by bevel gear wheels (33), which drive a zero shaft (34) in the event of rotational speed differences.

## Revendications

1. Banc d'essai pour véhicules à chenilles pour réaliser des processus de direction par freinage ou accélération de l'un ou l'autre côté de la chenille par un mécanisme de direction, dans lequel un véhicule à chenilles (1) est disposé de manière stationnaire, et les axes, pouvant être actionnés, du véhicule sont admis pour le réglage du moment par des freins (4, 5 ou 12, 13) sur des arbres rotatifs (2, 3) de chaque côté et sont reliés au moyen d'un mécanisme de blocage par un mécanisme (18) de type mécanisme différentiel et un arbre neutre (23), qui est un frein réglable (25), est actionnable par le mécanisme (18), suite à une différence du nombre de tour entre les deux côtés.

2. Dispositif suivant la revendication 1, **caractérisé en ce que** le mécanisme (18) est de type engrenage planétaire et les entrées d'engrenage (16, 17) sont chaque fois reliées par un essieu de roue planétaire (19, 20) et couplées l'une à l'autre par un arbre (24), où en outre, les deux côtés du mécanisme (18) actionnent l'arbre neutre (23) et sur un côté, un engrenage (21, 22) est intercalé sur l'inverseur de sens de rotation.

3. Dispositif suivant la revendication 2, **caractérisé en ce que** l'arbre (24) de la roue planétaire (18) présente un frein (26) et/ou un autre frein (27) avec moment élevé lors d'un faible nombre de tour.

4. Dispositif suivant la revendication 1, **caractérisé en ce que** le mécanisme (18) est un engrenage différentiel à roues coniques et **en ce que** les entrées du mécanisme (16, 17) sont reliées par des couronnes de différentiel (31, 32), où une entrée du mécanisme (16, 17) présente un engrenage (6, 7) pour l'inversion du sens de rotation et **en ce que** les couronnes de différentiel (31, 32) sont reliées par des roues dentées coniques (33), qui actionnent un arbre neutre (34) en cas de différence du nombre de tour.
